Europäisches Patentamt

(19) European Patent Office

Office européen des brevets

(11) Publication number: 0 117 091

A1

(12) **EUROPEAN PATENT APPLICATION**

(21) Application number: 84300680.0

(22) Date of filing: 03.02.84

(51) Int. Cl.³: **F 16 D 33/18**

(30) Priority: 03.02.83 GB 8303020

(43) Date of publication of application:
29.08.84 Bulletin 84/35

(84) Designated Contracting States:
DE FR IT

(71) Applicant: FLUIDRIVE ENGINEERING COMPANY
LIMITED
Broad Lane
Bracknell Berkshire, RG 12 3BH(GB)

(72) Inventor: Hardless, Charles Henry
244 Austin Street Sproule Street
Illewong New South Wales 2234(AU)

(74) Representative: Valentine, Francis Anthony
Brinsley et al,
REDDIE & GROSE 16 Theobalds Road
London WC1X 8PL(GB)

(54) Improvements relating to fluid couplings.

(57) A fluid coupling assembly comprises a fluid coupling (1) with vaned impeller and runner elements (2,3) in a rotary casing (7) which rotates with one of the elements. A stationary casing (12) encloses the fluid coupling assembly and defines an air space around it. An electrical air temperature probe (13) is carried by the stationary casing and is subjected to air flow from the rotating rotary casing. When the air temperature exceeds a predetermined value (e.g. when the driven load, such as a conveyor belt becomes jammed), the probe operates an alarm and the apparatus can be shut down.

IMPROVEMENTS RELATING TO FLUID COUPLINGS

The present invention is concerned with improvements relating to fluid couplings of the kind comprising vaned rotary impeller and runner elements which are rotatably and co-axially mounted and together define a toroidal working circuit for a liquid, one of the rotary elements carrying a rotary casing surrounding the other rotary element. As is well known, such fluid couplings are used in a wide variety of applications in many of which the coupling is interposed between an electric motor and a load and enables the motor to accelerate quickly to its intended running speed while the load itself is accelerated more gradually. Once the load has been accelerated to its normal speed, the slip in the coupling will be relatively small leading to a correspondingly small rate of heat generation within the coupling. If however the driven load, such as a conveyor belt, should become jammed, the entire power output of the driving motor is turned into heat within the coupling, resulting in a rapid rise in the temperature of the coupling. In order to prevent a dangerous situation arising, it is therefore common practice to fit safety devices, such as a fusible plug which yields at a pre-determined temperature or, where the working liquid has a vapour pressure which increases steeply with temperature, a bursting disc which will rupture at an internal pressure corresponding to the pre-determined temperature. Once the source of overload has been removed, the coupling has to be refilled and a new safety device fitted before the installation is ready for operation. Many coal mine operators view the operation of this type of safety device as fluid coupling 'unreliability', in view of the protracted disturbance to the coal producing process.

It is common practice for this type of equipment, when used in the extremely arduous service conditions appertaining to armoured flexible conveyors, to arrange that the gearbox, bell housing containing the fluid coupling, and flange mounted driving motor, forms a rigid tubular structure. Hence, by its very nature and to reduce the amount of air draft, as a dust suppression measure, the bell housing space tends to be almost totally enclosed. Thus, access to the coupling, for refilling after operation of the aforementioned safety devices, is still more time consuming.

There have accordingly been various proposals for giving an advance warning of an excessive temperature rise so that action can be taken either by an operator or an automatic mechanism to switch off the motor somewhat before the pre-determined temperature has been reached. One such device consists of a plunger mounted in the rotary casing of the coupling and held in a radially inward position by an alloy which has a melting point somewhat below the pre-determined temperature but above the normal operating temperatures attained during acceleration of the load. If the coupling attains a temperature greater than the melting point of the alloy, the plunger is free to move outwards under the action of a spring or centrifugal force or both, into the path of an operating member of a switch which is then operated to give an alarm or switch off the driving motor. Although such an arrangement avoids the need for refilling the coupling (provided of course that the device works satisfactorily even after a long interval) it is however still necessary to replace the plunger assembly by a new plunger assembly which may not be immediately available on site.

With a view to avoiding this problem, it has been proposed in BE2730141 to mount on a wall of one of the coupling elements a probe comprising a pick-up coil, the ends of which are connected together by a resistor the value of which varies abruptly just below the predetermined temperature and a pulse generator or emmiter is mounted on a fixed part of the assembly adjacent the path of the pick-up coil. The pulse generator is sensitive to the power absorbed by the pick-up coil as it passes during each cycle and can thus detect whether the temperature is safe or is approaching the predetermined value. Such an arrangement requires sophisticated techniques particularly

-4-

in choosing and designing the resistor for any particular required temperature and also requires careful mounting of the two units of the device in relation to each other.

According to the present invention there is provided a fluid coupling assembly comprising a fluid coupling having co-axially mounted vaned impeller and runner elements together defining a toroidal working circuit for liquid, a rotary casing mounted for rotation with one of the elements and surrounding the other element, a stationary casing enclosing the fluid coupling and defining an air space around the coupling within the housing and an electrical air temperature probe carried by the stationary casing in a position where it will be subjected to air flow from the rotating rotary casing in the coupling, the probe being connected to an electrical circuit which is arranged to operate an alarm in response to the temperature sensed by the probe approaching a pre-determined value.

When the alarm indicates a fault the operator can take the appropriate remedial action. Preferably the control circuit is arranged in a second stage of operation to switch off the driving motor. Thus, if no action is taken following the operation of the alarm, and if the temperature continues to rise, the apparatus is automatically shut down.

In a preferred embodiment a radial line from the coupling axis to the probe passes through the coupling. The probe may thus be subjected to a substantial air flow.

A thermostatic control mounted in a wall of an enclosure surrounding a fluid coupling is disclosed in U.S.-A-2156493, published in 1939. This control automatically adjusts the rate at which cooling water is sprayed onto the rotating casing during normal running. The control must be mounted away from the path of the cooling water.

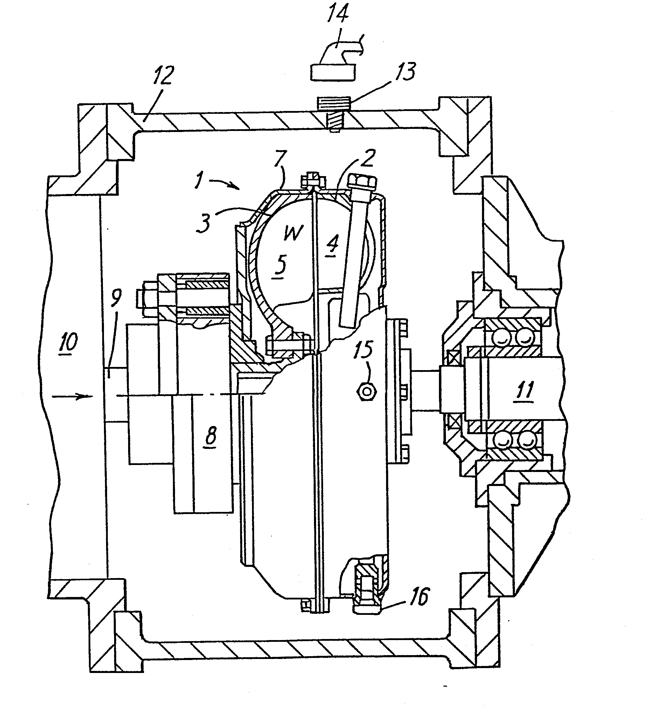

An embodiment of the invention will now be described by way of example with reference to the accompanying drawings, in which the single figure shows partly in elevation and partly in axial section a fluid coupling assembly according to the invention.

The fluid coupling assembly shown in the drawing comprises a fluid coupling 1 of the traction type which in use has a constant filling of working liquid which for underground applications will often be either non-toxic phosphate ester or water, rather than the more usual light mineral oil. The coupling 1 has a working circuit W defined by an impellor element 2 and a runner element 3, each of which is formed with radial vanes 4 and 5. The complete fluid coupling is mounted on a splined extension of output shaft 11 driving the load. The impeller 2 is bolted to a rotary casing 7 which is driven by a 3-phase electric driving motor 10 through the fully flexible coupling 8.

The runner 2 is mounted on an output shaft 11 driving a load, such as a conveyor belt (not shown). The electric motor 10 and coupling 1 are totally enclosed within a stationary outer casing 12. In accordance with the invention, an electrical temperature probe 13 is mounted in a screw-threaded aperture in the casing 12 and is positioned in register with the runner 2. The probe 13 may for example be of the platinum resistance type or a thermistor and is connected by means of a connector 14 to a control circuit such as a microprocessor (not shown) controlling one or more trip relays for operating an alarm or cutting the power supply to the driving motor.

The fluid coupling 1 also includes the conventional safety features such as a fusable plug 15 and, where the working liquid has a high vapour pressure as in the case of water-based emulsions, a bursting disc assembly 16 arranged to burst at a pressure corresponding to a temperature slightly higher than that which will cause the fusable plug to melt.

In use, when the casing 7 is rotating there will be a powerful swirling air flow within the virtually total enclosure of casing 12 since that the fluid coupling will usually be rotating at the 4-pole motor speed of either 1480 or 1780 rpm, according to whether 50 Hz or 60 Hz supply frequency is employed. Air from the neighbourhood of the rotating casing 7 will be directed radially outwards over the probe 13. Thus, any sudden rise in temperature within the working circuit W will result in an increase in the temperature sensed by the probe 13. The response rate of this arrangement is rapid as verified by tests on a loaded fluid coupling.

As part of the commissioning procedure for the insulation, the temperature sensed by thr probe during normal running operation would be established. By carrying out a series of special tests, the temperature sensed by the probe under various emergency conditions could also be determined. Obviously, other control modes could be arranged as required.

If necessary, the control circuit associated with the probe may include a delay means to prevent operation of the trip relays during the initial start-up or during re-starting after a blockage of the load has been cleared.

It will be appreciated that the probe 13 and all its associated equipment are accessible from outside the casing 12 which does not require to be dismantled for servicing the probe and its circuits.

CLAIMS:

1.      A fluid coupling assembly comprising a fluid coupling having co-axially mounted vaned impeller and runner elements together defining a toroidal working circuit for liquid, a rotary casing mounted for rotation with one of the elements and surrounding the other element, a stationary casing enclosing the fluid coupling and defining an air space around the coupling within the housing and an electrical air temperature probe carried by the stationary casing in a position where it will be subjected to air flow from the rotating rotary casing in the coupling, the probe being connected to an electrical circuit which is arranged to operate an alarm in response to the temperature sensed by the probe approaching a pre-determined value.

2.      An assembly according to claim 1, wherein the electrical circuit is arranged to respond to a continuing temperature increase, in a second stage of operation, to switch off a driving motor.

3.      An assembly according to claim 1 wherein a radial line from the coupling axis to the probe passes through the coupling.

# EUROPEAN SEARCH REPORT

**0117091**

Application number

EP 84 30 0680

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,D | US-A-2 156 493 (DURRELL)<br>* Page 1; figures * | 1 | F 16 D 33/18 |
| Y | FR-A- 875 406 (MAYBACH)<br>* Pages 1,2; figures * | 1,2 | |
| D,A | DE-A-2 730 141 (VOITH)<br>----- | 1 | |
| | | | **TECHNICAL FIELDS SEARCHED (Int. Cl. ³)**<br><br>F 16 D 33/00<br>F 16 H 41/00<br>F 16 D 45/00<br>F 16 P 7/00 |

The present search report has been drawn up for all claims

| Place of search | Date of completion of the search | Examiner |
|---|---|---|
| THE HAGUE | 12-04-1984 | FLORES E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82